# EUROPÄISCHE PATENTSCHRIFT

(11) **EP 3 138 378 B1**
(45) Veröffentlichungstag und Bekanntmachung des Hinweises auf die Patenterteilung: **26.09.2018**
(21) Anmeldenummer: 16401052.2
(22) Anmeldetag: 30.08.2016
(51) Int. Cl.: A01D 43/063, B65F 1/16, A01G 3/00, A01B 45/02

(54) **VORRICHTUNG ZUM MÄHEN, VERTIKUTIEREN UND/ODER AUFSAMMELN**
DEVICE FOR CUTTING, SCARIFYING AND / OR COLLECTING
DISPOSITIF DE MOISSON, SCARIFICATION ET/OU RAMASSAGE

(30) Priorität: 02.09.2015 DE 102015114621
(43) Veröffentlichungstag der Anmeldung: 08.03.2017
(73) Patentinhaber: Amazonen-Werke H. Dreyer GmbH & Co. KG, 49205 Hasbergen (DE)
(72) Erfinder: Gette, Christophe, 57300 Tremery (FR); Henry, Daniel, 57280 Maizieres les Metz (FR)

(56) Entgegenhaltungen:
- EP-A1- 1 557 081
- DE-A1- 19 755 196
- FR-A1- 2 912 434
- GB-A- 892 309
- US-A- 4 456 141

## Beschreibung

Die Erfindung betrifft eine Vorrichtung zum Mähen, Vertikutieren und/oder Aufsammeln gemäß des Oberbegriffes des Patentanspruches 1.

Durch die EP 1 557 081 A1 ist eine derartige Vorrichtung bekannt. Bei dieser Vorrichtung ist die Abdeckhaube in zwei Hälften geteilt, wovon die eine Hälfte der Abdeckhaube an der einen Seite der Öffnung des Sammelbehälters und die andere Hälfte der Abdeckhaube an der gegenüberliegenden Seite der Öffnung des Sammelbehälters schwenkbar angelenkt sind. Die jeweiligen Hälften der Abdeckhaube sind frei schwenkbar an dem Sammelbehälter angeordnet. Hierdurch verschwenken die jeweiligen Hälften der Abdeckhaube beim Bringen des Sammelbehälters in die Entleerposition und beim Zurückverschwenken des Sammelbehälters in die Sammelposition unkontrolliert. Dieses ist sehr belastend für die Gelenke und Bauteile des Sammelbehälter und der Hälften der Abdeckhaube, so dass es zu Beschädigungen an diesen Bauteilen kommt. Darüber hinaus entsteht eine hohe Geräuschentwicklung.

Eine weitere Vorrichtung zum Mähen, Vertikutieren und/oder Aufsammeln ist in der EP 0 676 128 A1 beschrieben. Die von der Vorrichtung aufgesammelten Stoffe werden in einen Sammelbehälter gesammelt. Der Sammelbehälter ist an einem Rahmen der Vorrichtung mittels einer Hebe- und/oder Kippeinrichtung montiert, die den Sammelbehälter zum Entleeren über diese Vorrichtung in eine Entleerungsstellung dreht und entleert. Die Entleerung erfolgt über eine in dem oberen Bereich des Sammelbehälters angeordnete Entleerungsöffnung. Die Entleerungsöffnung ist in Arbeitsstellung durch eine mittels einer Gelenkvorrichtung an den Sammelbehälter verschwenkbar angeordnete Abdeckhaube abgedeckt. Bei dieser bekannten Vorrichtung ist zwischen dem Sammelbehälter und der Abdeckhaube ein federndes Element, welches als Gasdruckfeder ausgebildet ist, angeordnet. Diese Gasdruckfeder bringt die Abdeckhaube einerseits beim Schwenken des Behälters automatisch in Öffnungsstellung und andererseits beim Rücktransport des Behälters in Arbeitsstellung automatisch und ruckartig in Schließstellung. Das Schließen der Entleerungsöffnung durch die Abdeckhaube mittels der hier entsprechend angeordneten Gasdruckfeder ist sehr geräuschvoll und laut. Dieses ist in vielen Fällen unerwünscht, einmal hinsichtlich der Geräuschentwicklung und andererseits wegen des hohen Verschleißes.

Der Erfindung liegt die Aufgabe zu Grunde, ein kontrolliertes Verschwenken der Abdeckhaube für das definierte Öffnen und einem sanften und leisen Verschließen der Entleerungsöffnung durch die Abdeckhaube zu erreichen.

Diese Aufgabe der erfindungsgemäß durch die kennzeichnenden Merkmale des Anspruches 1 gelöst.

Infolge dieser Maßnahmen wird durch die erfindungsgemäße Anordnung des federnden Elementes erreicht, dass durch das federnde Element die Abdeckhaube beim Verschwenken des Sammelbehälters in die Arbeitsstellung in sanfter Weise in ihrer Abdeckstellung verschwenkt, so dass sehr leise und kontrolliert die Entleerungsöffnung durch die Abdeckhaube geschlossen wird.

Gleichzeitig wird in schonender Weise die Endöffnungsposition für die Abdeckhaube während der Entleerung des Sammelbehälter festgelegt. Somit kann das federnde Anschlagelement in der Endphase des Öffnungsvorganges die Abdeckhaube in ihrer Endposition in schonender Weise abbremsen.

Weiterhin sorgt dieses federnde Abschlagelement zu Beginn des Schließungsvorganges der Entleerungsöffnung durch die Abdeckhaube dafür, dass die Abdeckhaube unmittelbar bei Beginn des Bringens des Sammelbehälters aus der Entleerungsposition in die Arbeitsposition auch in ungünstiger Position in Richtung der Schließposition gedrückt wird. Dies wird in schonender Weise dadurch erreicht, dass das federnde Anschlagelement zu Beginn des Schließvorganges der Entleerungsöffnung durch die Abdeckhaube an der Abdeckhaube anliegt und die Abdeckhaube in Richtung Abdeckstellung der Abdeckhaube drückt. Somit ist das federnde Element derart ausgebildet ist, dass es weder beim Öffnen noch beim Schließen der Entleerungsöffnung durch die Abdeckhaube aktiv das Öffnen oder das Schließen der Abdeckhaube unterstützt.

Hierbei kann das federnde Anschlagelement eine Druckfeder aufweisen.

In einer Ausführungsform ist vorgesehen, dass das federnde Element zwischen Sammelbehälter und Abdeckhaube als Gasdruckfeder und/oder Gasdruckdämpfer ausgebildet ist.

Weitere Einzelheiten der Erfindung sind der Beispielsbeschreibung und den Zeichnungen zu entnehmen. Die Zeichnungen zeigen
- Fig.1: die Vorrichtung zum Mähen, Vertikutieren und/oder Aufsammeln in Seitenansicht, wobei der Sammelbehälter sich in Arbeitsposition befindet,
- Fig.2: die Vorrichtung zum Mähen, Vertikutieren und/oder Aufsammeln in Seitenansicht, wobei der Sammelbehälter sich in Entleerungsposition befindet,
- Fig.3: die Vorrichtung zum Mähen, Vertikutieren und/oder Aufsammeln in Seitenansicht, wobei der Sammelbehälter sich wieder in Arbeitsposition, die Abdeckhaube sich jedoch noch in Öffnungsstellung befindet,
- Fig.4: der Sammelbehälter der Vorrichtung in Arbeitsstellung mit sich noch in Öffnungsstellung befindlicher Abdeckhaube in perspektivischer Ansicht von schräg vorne,
- Fig.5: der Sammelbehälter der Vorrichtung in Arbeitsstellung mit sich noch in Öffnungsstellung befindlicher Abdeckhaube in perspektivischer Ansicht von schräg hinten und
- Fig.6: die Anordnung des federnden Anschlagelementes zwischen Sammelbehälter und Abdeckhaube mit der Position der Abdeckhaube gemäß den Fig. 3-5 im vergrößerten Maßstab und in der Ansicht nach Fig.5.

Vorrichtung zum Mähen, Vertikutieren und/oder Aufsammeln von Gras, Laub, Schmutz oder sonstigen in der Landschaftspflege anfallenden Stoffen in einen Sammelbehälter ist im Ausführungsbeispiel als gezogene Mäh- und Vertikutiermaschine ausgebildet. Diese Maschine weist den Rahmen 1 auf, der sich auf die Hinterräder 2 auf dem Boden und auf der im vorderen Bereich des Rahmens 1 angeordneten Zugdeichsel 3, die an eine nicht dargestellte Zugmaschine angekoppelt ist, abstützt. Im vorderen Bereich des Rahmens 1 ist eine Mäh- oder Vertikutiereinrichtung 4 in bekannter Weise angeordnet. Diese Einrichtung 4 wird von der Zapfwelle des Zugfahrzeugs über die Gelenkswelle 5 in bekannter Weise angetrieben. Hinter der Mäh- oder Vertikutiereinrichtung 4 ist an dem Rahmen der Sammelbehälter 6 mittels einer Hebe- und Kippeinrichtung 7 angeordnet. Diese Hebe- und Kippeinrichtung 7 weist auf jeder Seite des Sammelbehälters 6 einen Hydraulikzylinder 8 auf.

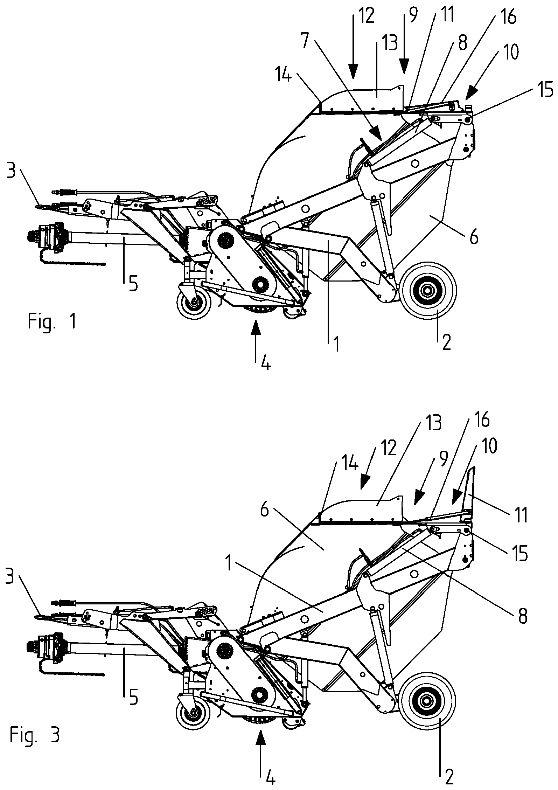

Der Sammelbehälter 6 weist in seiner Arbeitsstellung gemäß Figur 1 in seinem oberen Bereich die Entleerungsöffnung 9 auf. Die Entleerungsöffnung 9 wird in ihrem rückwärtigen Bereich 10 durch die Abdeckhaube 11 und in ihrem vorderen Bereich 12 durch eine Abdeckplatte 13 abgedeckt. Die Abdeckplatte 13 ist im vorderen Bereich mittels Gelenken 14 an den Sammelbehälter 5 schwenkbar angeordnet. Die Abdeckhaube 11 ist in ihrem hinteren Bereich an dem hinteren Bereich des Sammelbehälters 6 mittels Gelenken 15 schwenkbar befestigt. Die Abdeckplatte 13 und die Abdeckhaube 11 decken die Entleerungsöffnung 9 in der Arbeitsstellung des Sammelbehälters 6 ab.

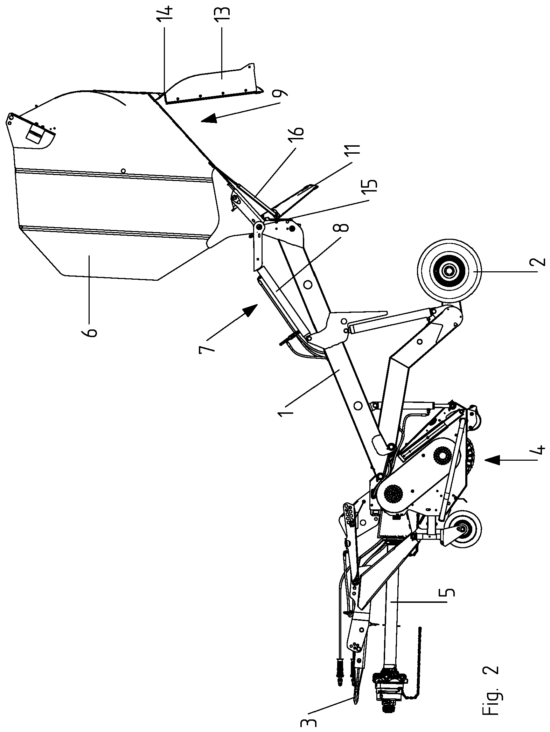

Zum Entleeren des Sammelbehälters 6 von den in ihm gesammelten Stoffen lässt sich der Sammelbehälter 6 aus der in Fig.1 dargestellten Arbeitsposition über die Hydraulikzylinder 8 der Hebe- und Kippeinrichtung 7 in die in Fig. 2 dargestellte Entleerungsposition anheben und verschwenken. Hierbei geben die Abdeckhaube 11 und die Abdeckplatte 13 die Entleerungsöffnung 9 frei. Die Abdeckhaube 11 dient gleichzeitig als Übergabeklappe, wenn beispielsweise das Material ohne Verluste in einen nicht dargestellten Transportbehälter übergeben werden muss.

Die Gelenkvorrichtung 15, mittels welches die Abdeckhaube 11 an dem Sammelbehälter 6 angeordnet ist, befindet sich zwischen dem oberen - hinteren Bereich der Entleerungsöffnung 9 und dem hinteren Bereich der Abdeckhaube 11. Zwischen dem Sammelbehälter 6 und der Abdeckhaube 11 ist zumindest ein als Gasdruckfeder oder Gasdruckdämpfer ausgebildetes federndes Element 16 angeordnet. Das federnde Element 16 ist so angeordnet, dass das federnde Element 16 bei dem Bewegen des Sammelbehälters 6 aus der Entleerungsstellung in die Arbeitsstellung die Abdeckhaube 11 während des Schließvorganges der Entleerungsöffnung 9 durch die Abdeckhaube 11 abbremst. Hierdurch wird ein kontrolliertes Verschwenken der Abdeckhaube 11 mit einem sanften und leisen Verschließen der Entleerungsöffnung 9 durch die Abdeckhaube 11 erreicht. Durch das federnde Element 16 wird die Abdeckhaube 11 beim Verschwenken des Sammelbehälters 6 in die Arbeitsstellung in sanfter Weise in ihre Abdeckstellung gemäß Fig. 1 verschwenkt, so dass sehr leise und kontrolliert die Entleerungsöffnung 9 durch die Abdeckhaube 11 geschlossen wird.

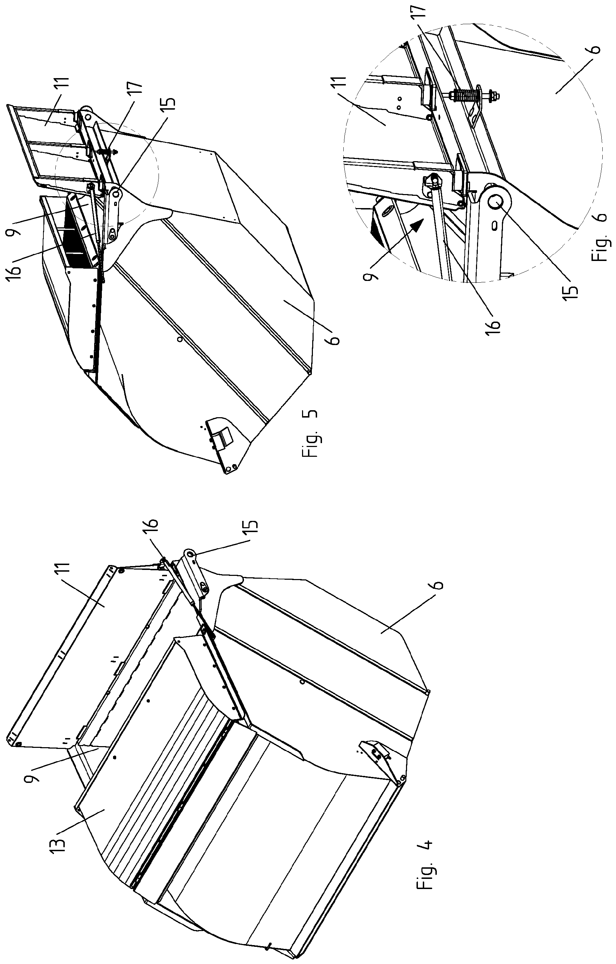

Im Bereich der Gelenkvorrichtung 15 ist ein federndes Anschlagelement 17, welches zwischen dem Sammelbehälter 6 und der Abdeckhaube 11 wirksam ist, angeordnet. Dieses federnde Anschlagelement 17 legt die Öffnungsposition der Abdeckhaube 11 fest und begrenzt das Öffnen der Abdeckhaube 11, wie die Fig. 3 - 6 zeigen. Somit kann das federnde Anschlagelement 17 in der Endphase des Öffnungsvorganges die Abdeckhaube 11 in ihrer Endposition zusätzlich in schonender Weise abbremsen. So wird in schonender Weise die Endöffnungsposition für die Abdeckhaube 11 während der Entleerung des Sammelbehälters 6 festgelegt.

Das federnde Element 16 ist derart ausgebildet und angeordnet, dass es weder beim Öffnen noch beim Schließen der Entleerungsöffnung 9 durch die Abdeckhaube 11 aktiv das Öffnen oder das Schließen der Abdeckhaube unterstützt. Beim Verschwenken der Abdeckhaube 11 in die Entleerungsstellung des Sammelbehälter und der Abdeckhaube gemäß Fig.2 unterstützt die Gasfeder 16 das Öffnen der Abdeckhaube nicht, sondern die Abdeckhaube 11 gelangt aufgrund ihrer Anordnung und ihres Gewichtes in die dargestellte Öffnungsstellung. Wenn der Behälter 6 leer ist und in die Arbeitsstellung zurück gedreht ist, wie in Fig.3-6 dargestellt, wird die Abdeckhaube erforderlichenfalls von dem federnden Anschlagelement 17 in Richtung Schließstellung gedrückt und schwenkt dann aufgrund ihres Gewichtes in gebremster Weise durch die Gasfeder in Ihre Schließstellung gemäß Fig.1 zurück. Da die Abdeckhaube aufgrund der Gasfeder 16 langsam in Schließposition zurückschwenkt, schließt die Abdeckhaube 11 kontrolliert, geräuschlos und schonend. Das Anschlagelement 17 ist als Druckfeder ausgebildet.

Weiterhin sorgt das federnde Anschlagelement 17 zu Beginn des Schließungsvorganges der Entleerungsöffnung 9 durch die Abdeckhaube 11 dafür, wenn sich der Sammelbehälter 9 und die Abdeckhaube 11 in der in Fig.3-6 dargestellten Position des Sammelbehälters 6 und der Abdeckhaube 11 befindet, dass die Abdeckhaube 11 unmittelbar bei Beginn des Bringens des Sammelbehälters aus der Entleerungsposition in die Arbeitsposition auch in ungünstiger Position, wie in den vorgenannten Abbildung dargestellt, in Richtung Schließposition entsprechend Fig.1 gedrückt wird. Dies wird in schonender Weise dadurch erreicht, dass das federnde Anschlagelement 17 zu Beginn des Schließvorganges der Entleerungsöffnung 9 durch die Abdeckhaube 11 an der Abdeckhaube 11 anliegt und die Abdeckhaube 11 in Richtung Abdeckstellung der Abdeckhaube 11 drückt.

## Patentansprüche

1. Vorrichtung zum Mähen, Vertikutieren und/oder Aufsammeln von Gras, Laub, Schmutz oder sonstigen in der Landschaftspflege anfallenden Stoffen in einen Sammelbehälter, der an einem Rahmen (1) der Vorrichtung mittels einer Hebe- und/oder Kippeinrichtung (7) montiert ist, die den Sammelbehälter (6) zum Entleeren über diese Vorrichtung in eine Entleerungsstellung dreht und entleert, wobei der Sammelbehälter (6) in Arbeitsstellung in seinem oberen Bereich eine Entleerungsöffnung (9) aufweist, die in Arbeitsstellung durch eine mittels einer Gelenkvorrichtung (15) an den Sammelbehälter (6) verschwenkbar angeordneten Abdeckhaube (11) zumindest teilweise abgedeckt ist, wobei die Gelenkvorrichtung (15) sich zwischen dem oberen- hinteren Bereich der Entleerungsöffnung (9) und dem hinteren Bereich der Abdeckhaube (11) befindet, **dadurch gekennzeichnet**, zwischen dem Sammelbehälter (6) und der Abdeckhaube (11) ein federndes Element (16) angeordnet ist, dass das federnde Element (16) bei dem Bewegen des Sammelbehälters (6) aus der Entleerungsstellung in die Arbeitsstellung die Abdeckhaube (11) während des Schließvorganges der Entleerungsöffnung (9) durch die Abdeckhaube (11) abbremst, dass im Bereich der Gelenkvorrichtung (15) ein federndes Anschlagelement (17), welches zwischen dem Sammelbehälter (6) und der Abdeckhaube (11) wirksam ist, vorgesehen ist, welches das Öffnen der Abdeckhaube (11) festlegt und begrenzt.

2. Vorrichtung nach Anspruch 1, **dadurch gekennzeichnet, dass** das federnde Anschlagelement (11) zu Beginn des Schließvorganges der Entleerungsöffnung (9) durch die Abdeckhaube (11) an der Abdeckhaube (11) anliegt und die Abdeckhaube (11) in Richtung Abdeckstellung der Abdeckhaube (11) drückt.

3. Vorrichtung nach Anspruch 1, **dadurch gekennzeichnet, dass** das federnde Anschlagelement (11) eine Druckfeder aufweist.

4. Vorrichtung nach einem der vorstehenden Ansprüche, **dadurch gekennzeichnet, dass** das federnde Element (16) zwischen Sammelbehälter (6) und Abdeckhaube (11) als Gasdruckfeder und/oder Gasdruckdämpfer ausgebildet ist.

5. Vorrichtung nach zumindest einem der vorstehenden Ansprüche, **dadurch gekennzeichnet, dass** das federnde Element (16) derart ausgebildet ist, dass es weder beim Öffnen noch beim Schließen der Entleerungsöffnung (9) durch die Abdeckhaube (11) aktiv das Öffnen oder das Schließen der Abdeckhaube (11) unterstützt.

## Claims

1. Device for mowing, scarifying and/or collecting grass, foliage, dirt or other materials occurring in landscape management into a collecting container which is mounted on a frame (1) of the device by means of a lifting and/or tilting means (7) which rotates the collecting container (6) for emptying purposes over said device into an emptying position and empties same, wherein, in the working position, the collecting container (6) has, in its upper region an emptying opening (9) which, in the working position, is at least partially covered by a covering hood (11) which is arranged pivotably on the collecting container (6) by means of an articulation device (15), wherein the articulation device (15) is located between the upper rear region of the emptying opening (9) and the rear region of the covering hood (11), **characterized in that** a resilient element (16) is arranged between the collecting container (6) and the covering hood (11), **in that**, during the movement of the collecting container (6) from the emptying position into the working position, the resilient element (16) brakes the covering hood (11) during the closing operation of the emptying opening (9) by the covering hood (11), **in that** a resilient stop element (17) is provided in the region of the articulation device (15), said stop element being effective between the collecting container (6) and the covering hood (11) and defining and limiting the opening of the covering hood (11).

2. Device according to Claim 1, **characterized in that** the resilient stop element (11) lies against the covering hood (11) at the beginning of the closing operation of the emptying opening (9) by the covering hood (11) and presses the covering hood (11) in the direction of the covering position of the covering hood (11).

3. Device according to Claim 1, **characterized in that** the resilient stop element (11) has a compression spring.

4. Device according to one of the preceding claims, **characterized in that** the resilient element (16) between collecting container (6) and covering hood (11) is designed as a gas-filled compression spring and/or gas-filled compression damper.

5. Device according to at least one of the preceding claims, **characterized in that** the resilient element (16) is designed in such a manner that it does not actively assist the opening or closing of the covering hood (11) either during the opening or during the closing of the emptying opening (9) by the covering hood (11).

## Revendications

1. Dispositif de fauche, scarification et/ou de ramassage d'herbe, de feuilles, de saletés ou d'autres substances survenant au cours de l'entretien paysager, dans un récipient de collecte qui est monté sur un cadre (1) du dispositif au moyen d'un dispositif de levage et/ou de basculement (7), qui pour le vidage par le biais de ce dispositif, fait tourner le récipient de collecte (6) dans une position de vidage et le vide, le récipient de collecte (6) présentant, dans une position de travail, dans sa région supérieure, une ouverture de vidage (9) qui, dans la position de travail, est au moins en partie recouverte par un capot de recouvrement (11) disposé de manière à pouvoir pivoter au moyen d'un dispositif d'articulation (15) au niveau du récipient de collecte (6), le dispositif d'articulation (15) se trouvant entre la région supérieure arrière de l'ouverture de vidage (9) et la région arrière du capot de recouvrement (11), **caractérisé en ce qu'**entre le récipient de collecte (6) et le capot de recouvrement (11) est disposé un élément à ressort (16), **en ce que** l'élément à ressort (16), lors du déplacement du récipient de collecte (6) de la position de vidage dans la position de travail, freine le capot de recouvrement (11) pendant l'opération de fermeture de l'ouverture de vidage (9) par le capot de recouvrement (11), **en ce que** dans la région du dispositif d'articulation (15) est prévu un élément de butée à ressort (17) qui agit entre le récipient de collecte (6) et le capot de recouvrement (11), lequel fixe et limite l'ouverture du capot de recouvrement (11).

2. Dispositif selon la revendication 1, **caractérisé en ce que** l'élément de butée à ressort (11), au début de l'opération de fermeture de l'ouverture de vidage (9) par le capot de recouvrement (11), s'applique contre le capot de recouvrement (11) et presse le capot de recouvrement (11) dans la direction de la position de recouvrement du capot de recouvrement (11).

3. Dispositif selon la revendication 1, **caractérisé en ce que** l'élément de butée à ressort (11) présente un ressort de compression.

4. Dispositif selon l'une quelconque des revendications précédentes, **caractérisé en ce que** l'élément à ressort (16) entre le récipient de collecte (6) et le capot de recouvrement (11) est réalisé sous la forme d'un ressort à pression de gaz et/ou d'un amortisseur à pression de gaz.

5. Dispositif selon au moins l'une quelconque des revendications précédentes, **caractérisé en ce que** l'élément à ressort (16) est réalisé de telle sorte que ni lors de l'ouverture ni lors de la fermeture de l'ouverture de vidage (9) par le capot de recouvrement (11), il ne supporte activement l'ouverture ou la fermeture du capot de recouvrement (11).
